# EUROPEAN PATENT SPECIFICATION

(11) **EP 2 172 629 B1**
(45) Date of publication and mention of the grant of the patent: **28.12.2011**
(21) Application number: 09169833.2
(22) Date of filing: 09.09.2009
(51) Int. Cl.: F01N 3/20

(54) **Apparatus and method for maintaining a urea solution in a liquid state for treatment of diesel exhaust**
Vorrichtung und Verfahren zur Erhaltung einer Harnstofflösung in flüssigem Zustand zur Behandlung von Diesel-Abgas
Appareil et procédé pour maintenir une solution d'urée à l'état liquid pour le traitement de gaz d'échappement d'un moteur Diesel

(30) Priority: 01.10.2008 US 286652
(43) Date of publication of application: 07.04.2010
(73) Proprietor: Delphi Technologies, Inc., Troy MI 48007 (US)
(72) Inventor: Li, Bob Xiaobin, Grand Blanc, MI 48439 (US); Seino, Michael James, Flushing, MI 48433 (US)
(74) Representative: Denton, Michael John

(56) References cited:
- EP-A- 1 647 324
- WO-A-2007/095955

## Description

### TECHNICAL FIELD

The present invention relates to emissions control in compression-ignited internal combustion engines; more particularly, to systems for injecting urea into diesel exhaust to scavenge nitrogen oxides; and most particularly, to a system for melting a reservoir solution of urea contained in a solid icing state at normally sub-freezing temperatures.

### BACKGROUND OF THE INVENTION

To scavenge oxides of nitrogen (NOx) from the exhaust of compression-ignited (CI) engines, and especially diesel engines, urea injection systems are commonly in use in the prior art. A urea and water solution is injected into the hot exhaust pipe, where urea is hydrolyzed into ammonia ahead of a selective catalytic reduction (SCR) converter. Ammonia reacts with NOx trapped on the catalyst face to form N₂, CO₂, and H₂O, thereby lowering the level of noxious emissions in the exhaust.

A problem in the prior art is that at temperatures below about - 11°C, the urea solution can freeze. Thus, a thermal heating system and method are required to thaw the solid solution into a liquid solution (or to keep the solution from freezing) to permit a pump to draw solution for delivery into the exhaust pipe (for example, US 2007/0157602 A1).

The problems inherent in providing such a system and method are considerable. Thawing a frozen reservoir of solution or providing continuous heat to the solution by electrical resistance is parasitic to the overall electrical energy balance of an engine, which can be a significant detriment especially in hybrid-electric vehicles. Urea solutions can be highly corrosive to some materials. A system must be able to spread heat to a large surface area while not over-heating the fluid to an un-necessary temperature level; thus, heater wattage density must be optimized, and the heater circuit must be well sealed or otherwise protected. The heater must be in continuous contact with the frozen and/or liquid solution as solution is being consumed, so that maximum heat transfer efficiency can be achieved.

Any of various prior art using contact heating devices may be considered to thaw the frozen solution, such as use of a PTC ceramic heating element enclosed in a protective skin, or resistance coil heaters submerged in the solution. However, such heating apparatus can only provide localized heating, and melt the ice surrounding the heater. Thus, the ice volume that can be readily melted is only a small portion of the ice within the large tank of urea ice. Furthermore, these heating devices melt the ice by heat conduction and convection through the media. These devices work well if there is no separation at the boundary of the melted liquid and the ice. However, this usually is not the case. As the melting ice transitions from the solid state to the liquid state going through the phase change, the volume reduces. This creates air pockets at the boundary between the liquid urea and solid urea ice. Moreover, as liquid urea solution is extracted from the container, an even larger air pocket is created between liquid and ice urea. Heat to melt the ice can only be transferred through this air pocket by radiation. These devices are not effectively designed for heating by radiation, thus resulting in a loss of heating efficiency.

What is needed in the art is an improved heating apparatus and method of use wherein heat is applied through a urea solution without local hot spots, and wherein heat is applied in proportion to the volume of solution present to prevent overheating and/or waste of electricity.

It is a principal object of the present invention to provide a reliable flow of liquid urea solution at ambient temperatures below the freezing point of the solution.

### SUMMARY OF THE INVENTION

A system and method in accordance with the present invention is defined by the features of claims 1 and 12.

Briefly described, a system for melting a reservoir solution of urea in a solid state at normally sub-freezing temperatures comprises a urea reservoir tank having an inlet port and an outlet port for supplying and withdrawing urea solution, a fluid level sensing apparatus (preferably continuous), a fluid pickup tube (preferably heated) and a non-contact heating device, such as an infrared (IR) emitter or a microwave emitter, controlled by an electrical controller. In one aspect of the invention, the non-contacting heating device is disposed on one side of the urea tank, such as for example the bottom of the tank, and encapsulated by a protective IR transparent jacket. Liquid urea, melted by the non-contact heater collects at the bottom of the tank where a pickup tube transports the urea liquid out of the tank. The tube may be heated to keep the urea in its liquid state. In another aspect of the invention, the heating device includes a plurality of non-contact heating elements disposed in vertical relationship to one another. Preferably, the heating elements are encased in IR-transparent protective tubes. Each heating element represents a horizontally defined heating zone. When the reservoir tank is full and predetermined temperature conditions are met, all of the heaters are on, each heater irradiating its own horizontal zone. As zones are progressively emptied during consumption of the urea solution, as determined by the fluid level sensor, the respective zone heaters are turned off, thereby conserving electricity. The melted fluid is then drawn by the pickup tube at the bottom of the tank and delivered to the vehicle exhaust pipe.

### BRIEF DESCRIPTION OF THE DRAWINGS

The present invention will now be described, by way of example, with reference to the accompanying drawing, in which:
FIG. 1 is an elevational schematic view of a system of a first embodiment in accordance with the present invention for melting a reservoir solution of urea in a solid state at normally sub-freezing temperatures; and
FIG. 2 is an elevational schematic view of a system of a second embodiment in accordance with the present invention for melting a reservoir solution of urea in a solid state at normally sub-freezing temperatures.

The exemplification set out herein illustrates one preferred embodiment of the invention, in one form, and such exemplification is not to be construed as limiting the scope of the invention in any manner.

### DESCRIPTION OF THE PREFERRED EMBODIMENTS

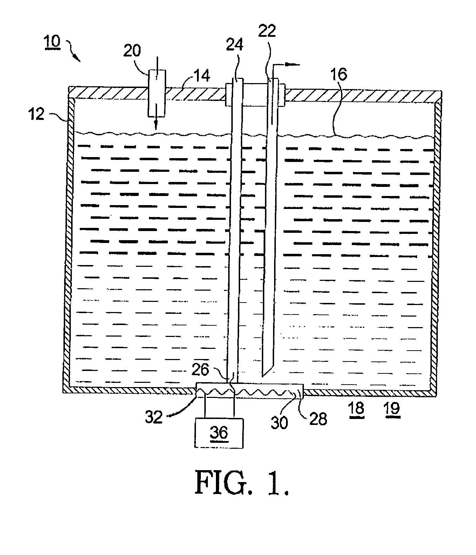

Referring to FIG. 1, an exemplary system 10 in accordance with the present invention for melting a reservoir solution of urea in a solid state at normally sub-freezing temperatures comprises a tank 12 having a sealable lid 14 for preventing leakage of a urea solution 16 during ordinary motion of the tank as can occur in use during operation of a vehicle 18 wherein system 10 is disposed. Typically, vehicle 18 is powered by a compression-ignited engine 19 such as a diesel engine. (For reference herein, system 10 is shown in FIG. 1 in correct gravitational orientation.) Tank 12 is provided with a fill tube 20 and an outlet tube 22 for respectively supplying and withdrawing urea solution.

Within tank 12 is disposed a level sensor apparatus 24, such as for example, a capacitive type fluid level sensor, for sensing the level of urea contained in the tank. A temperature sensor 26 for measuring the temperature of the urea is located near the bottom of the tank. A non-contact heater 28, for example an infrared or microwave heater, is used to melt the ice. Heater 28, including a heating element 30, is positioned to radiate within solution 16 and is contained in an IR-transparent sealed envelope 32, preferably a sealed thick wall quartz jacket. It will be seen that the tank of solution is heated radiantly by element 30. Preferably, level sensor apparatus 24 and temperature sensor 26 are in communication with and heating element 30 is controlled by a programmable controller 36.

In operation, when temperature conditions require, as programmed into controller 36 (for example, when sub-freezing conditions for solution 16 are either near or actually pertain), system 10 interrogates level sensor apparatus 24 and temperature sensor 26 and then energizes heating element 30. Preferably, the power level may be varied by the controller, the object being to raise or maintain the temperature of solution 16 above its freezing temperature within tank 12. The melted urea solution forms a liquid pool at the bottom of the tank where the pickup tube 22 extracts the liquid urea for usage. In one aspect of the invention, the pickup tube is heated to maintain the urea in its melted state.

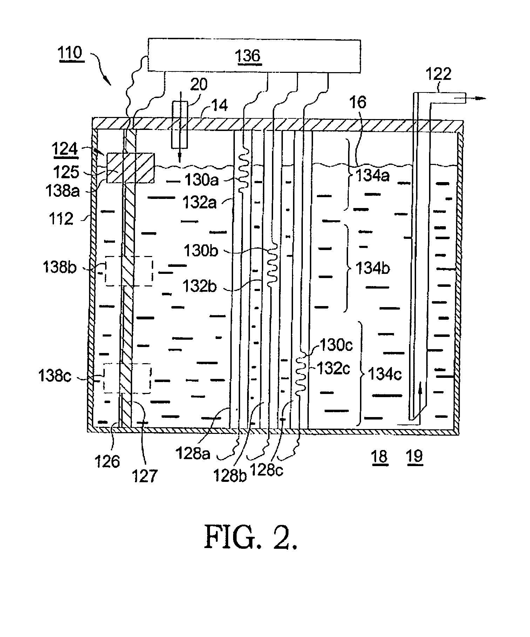

Referring to FIG. 2, system 110 in accordance with a second embodiment of the present invention for melting a reservoir solution of urea in a solid state comprises a tank 112 having a sealable lid 14 used in a vehicle 18 wherein system 110 is disposed. Typically, vehicle 18 is powered by a compression-ignited engine 19. Tank 112 is provided with a fill tube 20 and an outlet tube 122 for respectively supplying and withdrawing urea solution.

Within tank 112 are disposed a level sensor apparatus 124, such as for example, float 125, slidably fitted around stainless steel tube 127. A circuit board containing a bank of reid switches (not shown) is disposed within tube 127. A magnet embedded within float 125 sequentially closes the contacts in the reid switches, as the float travels up and down the tube, thereby detecting the level of urea remaining in the tank. A temperature sensor 126 for measuring the temperature of the urea is located near the bottom of the tank and preferably within tube 127. A plurality of submersible, non-contact heaters 128a, 128b, 128c, preferably infrared or microwave heaters is used to melt the ice. More or fewer heaters 128 may be employed as may be desired. Each heater 128 includes a heating element 130a, 130b, 130c, each of which is positioned to radiate substantially horizontally within solution 16 and each is contained in an IR-transparent sealed envelope 132, preferably a sealed thick wall quartz tube. A tube may contain more than one element if desired. Heating elements 130a, 130b, 130c are arranged in vertical relationship with respect to one another such that each horizontally-radiating heating element supplies heat energy to its respective horizontal zone 134a, 134b, 134c, the zones being defined thereby. It will be seen that the tank of solution thus comprises a stack of horizontal zones, each of which is heated independently of the others by one of elements 130a, 130b, 130c. Preferably, the level sensor, temperature sensor, and heating elements are in communication with and controlled by a programmable controller 136. Each heating element may be energized and de-energized directly by level sensor apparatus 124 output corresponding to the urea level.

In operation, when temperature conditions require, as programmed into controller 136, system 110 interrogates level sensor apparatus 124 as to the number of horizontal zones 134a,134b,134c occupied by solution 16 and then energizes those heating elements 130a,130b,130c in zones occupied by solution 16. Preferably, the power level in each zone may be varied by the controller, the object being to raise or maintain the temperature of solution 16 above its freezing temperature at all points within tank 112.

As liquid solution 16 is consumed by use in vehicle 18, zones 134a,134b,134c are progressively depleted of solution. As level sensor 124 recognizes a predetermined drop in level, for example from float position 138a to float position 138b, the upper heating element 30a is de-energized. As solution 16 is further consumed and zone 134b is emptied and float 125 descends to float position 138c, central heating element 130b is also de-energized, leaving only lower element 130c energized to continue heating zone 134c. Thus each zone is heated independently and electricity usage is optimized.

## Claims

1. A system (10) for melting a reservoir solution of urea (16) in a solid icing state at normally sub-freezing temperatures comprising a tank (12) for containing said urea solution (16), **characterized by** comprising at least one non-contacting heating element (30) positioned to radiate within the urea solution (16) for melting said urea solution.

2. A system (10) in accordance with Claim 1 wherein said heating element (30) is selected from the group consisting of infrared and microwave.

3. A system (110) in accordance with Claim 1 wherein said tank (112) is divided into a plurality of vertically-arranged horizontal heating zones (134), wherein each of said horizontal heating zones contains at least one of said at least one non-contacting heating element (130).

4. A system (110) in accordance with Claim 3 further includes a controller (136), wherein each of said at least one non-contacting heating element (130) is independently controllable by said controller (136) and wherein each of said at least one non-contacting heating element (130) is controllably energized to apply heat to a respective heating zone (134).

5. A system (110) in accordance with Claim 4 wherein each of said at least one non-contacting heating element (130) is energized only when said zone (134) is occupied by said solution of urea (16).

6. A system (110) in accordance with claim 1 further comprising:
a level sensor (124) for determining the depth of said solution in said tank (112);
a plurality of said non-contacting heating elements (130) disposed in said tank and arranged in vertical relationship with respect to one another such that each heating element supplies heat energy to a respective horizontal zone (134) within said tank (112), a plurality of said zones (134) being defined thereby; and
an apparatus (136) for energizing and de-energizing each of said heating elements (130) independently, responsive to signals from said level sensor (124).

7. A system (110) in accordance with Claim 6 wherein said heating elements (130) are selected from the group consisting of infrared and microwave.

8. A system (110) in accordance with Claim 6 wherein said level sensor (124) includes a float (125).

9. A system (110) in accordance with Claim 6 wherein each of said heating elements (130) is encased in a sealed envelope (132).

10. A system (110) in accordance with Claim 9 wherein said sealed envelope (132) is formed of quartz.

11. A system (110) in accordance with Claim 6 wherein more than one of said heating elements (130) is enclosed in a single sealed envelope (132).

12. A method of operating a system for keeping a reservoir solution of urea in a liquid state at normally sub-freezing temperatures wherein the system includes a tank (112) divided into a plurality of vertically-arranged horizontal heating zones (134) wherein each of horizontal heating zones contains an independently controllable heating element (130), the method comprising the steps of:
a) energizing each independently controllable heating element (130) when a corresponding zone of said horizontal heating zones (134) contains said solution of urea (16); and
b) de-energizing each independently controllable heating element (130) when a solution criteria exists.

13. A method in accordance with Claim 12 wherein said solution criteria is when the corresponding zone of said horizontal heating zones (134) is depleted of said solution of urea (16).

14. A method in accordance with Claim 12 including the further step of determining whether solution temperature criteria are met before energizing said heating elements (130).

15. A method in accordance with Claim 14 wherein said solution temperature criteria include the freezing temperature of said solution.

## Patentansprüche

1. System (10) zum Schmelzen einer Reservoir-Harnstofflösung (16) in einem festen Eiszustand bei normalen Temperaturen unter dem Gefrierpunkt, das einen Tank (12) aufweist, der die Harnstofflösung (16) enthält, **gekennzeichnet durch** ein Aufweisen zumindest eines nicht-kontaktierendes Heizelements (30), das positioniert ist, innerhalb der Harnstofflösung (16) auszustrahlen, um die Harnstofflösung zu schmelzen.

2. System (10) gemäß Anspruch 1, wobei das Heizelement (30) aus der Gruppe ausgewählt ist, die aus Infrarot und Mikrowellen besteht.

3. System (110) gemäß Anspruch 1, wobei der Tank (112) in eine Vielzahl von vertikal angeordneten horizontalen Heizzonen (134) unterteilt ist, wobei jede der horizontalen Heizzonen zumindest eines des zumindest einen nicht-kontaktierenden Heizelements (130) enthält.

4. System (110) gemäß Anspruch 3, das weiter eine Steuervorrichtung (136) umfasst, wobei jedes des zumindest einen nicht- kontaktierenden Heizelements (130) unabhängig steuerbar ist durch die Steuervorrichtung (136) und wobei jedes des zumindest einen nicht- kontaktierenden Heizelements (130) steuerbar mit Energie versorgt wird, um Wärme auf eine jeweilige Heizzone (134) anzuwenden.

5. System (110) gemäß Anspruch 4, wobei jedes des zumindest einen nicht-kontaktierenden Heizelements (130) nur mit Energie versorgt wird, wenn die Zone (134) von der Harnstofflösung (16) ausgefüllt ist.

6. System (110) gemäß Anspruch 1, das weiter aufweist:
einen Füllstandssensor (124) zum Bestimmen der Tiefe der Lösung in dem Tank (112);
eine Vielzahl von nicht-kontaktierenden Heizelementen (130), die in dem Tank angeordnet sind und in vertikaler Beziehung zueinander derart angeordnet sind, dass jedes Heizelement Wärmeenergie an eine jeweilige horizontale Zone (134) in dem Tank (112) liefert, wodurch eine Vielzahl von Zonen (134) definiert wird; und
eine Vorrichtung (136) zum mit Energie versorgen und nicht mit Energie versorgen jedes der Heizelemente (130) unabhängig, in Reaktion auf Signale von dem Füllstandssensor (124).

7. System (110) gemäß Anspruch 6, wobei die Heizelemente (130) aus der Gruppe ausgewählt sind, die aus Infrarot und Mikrowellen besteht.

8. System (110) gemäß Anspruch 6, wobei der Füllstandssensor (124) einen Schwimmer (125) umfasst.

9. System (110) gemäß Anspruch 6, wobei jedes der Heizelemente (130) in einer abgedichteten Hülle (132) eingeschlossen ist.

10. System (110) gemäß Anspruch 9, wobei die abgedichtete Hülle (132) aus Quarz gebildet wird.

11. System (110) gemäß Anspruch 6, wobei mehr als eines der Heizelemente (130) in einer einzelnen abgedichteten Hülle (132) eingeschlossen ist.

12. Verfahren zum Betreiben eines Systems zum Halten einer Reservoir-Harnstofflösung in einem flüssigem Zustand bei normalen Temperaturen unter dem Gefrierpunkt, wobei das System einen Tank (112) umfasst, der in eine Vielzahl von vertikal angeordneten horizontalen Heizzonen (134) unterteilt ist, wobei jede der horizontalen Heizzonen ein unabhängig steuerbares Heizelement (130) enthält, wobei das Verfahren die Schritte aufweist:
a) mit Energie versorgen jedes unabhängig steuerbaren Heizelements (130), wenn eine entsprechende Zone der horizontalen Heizzonen (134) die Harnstofflösung (16) enthält; und
b) nicht mit Energie versorgen jedes unabhängig steuerbaren Heizelements (130), wenn ein Lösungs-Kriterium existiert.

13. Verfahren gemäß Anspruch 12, wobei das Lösungs-Kriterium ist, wenn die Harnstofflösung (16) in der entsprechenden Zone der horizontalen Heizzonen (134) verbraucht ist.

14. Verfahren gemäß Anspruch 12, das den weiteren Schritt eines Bestimmens umfasst, ob Lösungs-Temperatur-Kriterien erfüllt sind, vor einem mit Energie versorgen der Heizelemente (130).

15. Verfahren gemäß Anspruch 14, wobei die Lösungs-Temperatur-Kriterien die Gefriertemperatur der Lösung umfassen.

## Revendications

1. Système (10) pour faire fondre une solution d'urée (16) en réservoir dans un état de congélation solide à des températures normalement inférieures à la congélation, comprenant un réservoir (12) pour contenir ladite solution d'urée (16), **caractérisé en ce qu'**il comprend au moins un élément chauffant sans contact (30) positionné de manière à rayonner à l'intérieur de la solution d'urée (16) pour faire fondre ladite solution d'urée.

2. Système (10) selon la revendication 1, dans lequel ledit élément chauffant (30) est choisi parmi le groupe comprenant les éléments à infrarouge et les éléments à micro-ondes.

3. Système (110) selon la revendication 1, dans lequel ledit réservoir (112) est divisé en une pluralité de zones de chauffage horizontales (134) agencées verticalement, telles que chacune desdites zones de chauffage horizontales contient au moins un desdits au moins un élément chauffant sans contact (130).

4. Système (110) selon la revendication 3, incluant en outre un contrôleur (136), tel que chacun desdits au moins un élément chauffant sans contact (130) peut être commandé indépendamment par ledit contrôleur (136), et dans lequel chacun desdits au moins un élément chauffant sans contact (130) est alimenté en énergie de manière commandée pour appliquer de la chaleur à une zone de chauffage respective (134).

5. Système (110) selon la revendication 4, dans lequel chacun desdits au moins un élément chauffant sans contact (130) est alimenté en énergie uniquement quand ladite zone (134) est occupée par ladite solution d'urée (16).

6. Système (110) selon la revendication 1, comprenant en outre :
un détecteur de niveau (124) pour déterminer la profondeur de ladite solution dans ledit réservoir (112) ;
une pluralité desdits éléments chauffants sans contact (130) disposés dans ledit réservoir et agencés en relation verticale les uns par rapport aux autres, de sorte que chaque élément chauffant fournit de l'énergie de chauffage à une zone horizontale respective (134) à l'intérieur dudit réservoir (112), ceci définissant une pluralité desdites zones (134) ; et
un appareil (136) pour alimenter en énergie et couper l'alimentation en énergie de chacun desdits éléments chauffants (130) indépendamment, en réponse à des signaux provenant dudit détecteur de niveau (124).

7. Système (110) selon la revendication 6, dans lequel lesdits éléments chauffants (130) sont choisis parmi le groupe comprenant les éléments à infrarouge et les éléments à micro-ondes.

8. Système (110) selon la revendication 6, dans lequel ledit détecteur de niveau (124) inclut un flotteur (125).

9. Système (110) selon la revendication 6, dans lequel chacun desdits éléments chauffants (130) est enfermé dans une enveloppe scellée (132).

10. Système (110) selon la revendication 9, dans lequel ladite enveloppe scellée (132) est formée de quartz.

11. Système (110) selon la revendication 6, dans lequel plus d'un desdits éléments chauffants (130) est enfermé dans une enveloppe scellée unique (132).

12. Procédé pour faire fonctionner un système pour maintenir une solution d'urée en réservoir dans un état liquide à des températures normalement inférieures à la congélation, dans lequel le système inclut un réservoir (112) divisé en une pluralité de zones de chauffage horizontales (134) agencées verticalement, telles que chacune des zones de chauffage horizontales contient un élément chauffant commandé de manière indépendante (130), le procédé comprenant les étapes consistant à :
a) alimenter en énergie chaque élément chauffant commandé de manière indépendante (130) quand une zone correspondante desdites zones de chauffage horizontales (134) contient ladite solution d'urée (16) ; et
b) couper l'alimentation en énergie de chaque élément chauffant commandé de manière indépendante (130) quand il existe un critère de solution.

13. Procédé selon la revendication 12, dans lequel ledit critère de solution se présente quand la zone correspondante desdites zones de chauffage horizontales (134) est épuisée de ladite solution d'urée (16).

14. Procédé selon la revendication 12, incluant en outre l'étape consistant à déterminer si des critères de température de solution sont satisfaits avant d'alimenter en énergie lesdits éléments chauffants (130).

15. Procédé selon la revendication 14, dans lequel ledit critère de température de solution inclut la température de congélation de ladite solution.
